# EUROPEAN PATENT SPECIFICATION

(11) **EP 3 967 406 B1**
(45) Date of publication and mention of the grant of the patent: **08.04.2026**
(21) Application number: 21202936.7
(22) Date of filing: 13.11.2015
(51) Int. Cl.: B04C 5/04, B04C 5/13, B04C 5/14, B04C 5/081, B04C 5/103, B04C 9/00

(54) **SOLIDS SEPARATION, WASHING AND SAMPLING SYSTEM**
FESTSTOFFTRENNUNGS-, -WASCH- UND -PROBENAHMESYSTEM
SYSTÈME DE SÉPARATION, DE LAVAGE ET D'ÉCHANTILLONNAGE DE SOLIDES

(30) Priority: 14.11.2014 GB 201420257
(43) Date of publication of application: 16.03.2022
(62) Divisional of application: 15794581.7
(73) Proprietor: DWC AS, 5200 Oslo (NO)
(72) Inventor: AREFJORD, Anders, 5217 Hagavik (NO); BRUNTVEIT, Joergen, 5073 Bergen (NO); LYNGBOE, Karl Ole Daviksnes, 5216 Lepsoey (NO); MCCANN, Dominic Patrick, Hampshire, SO51 9LN (GB)
(74) Representative: Page White Farrer

(56) References cited:
- WO-A1-99/38617
- CN-U- 202 570 449
- GB-A- 2 293 992
- US-A- 3 745 752
- US-A- 3 850 816
- US-A- 4 161 428
- US-A- 4 455 220

## Description

The present invention relates to an apparatus for, and a method of, separating solid particles from a hydrocarbon-containing fluid produced from an oil and/or gas production facility. In particular the present invention relates to a system for the removal of solids, in particular sand, the washing of these solids and the application thereof, particularly in the production of oil and/or gas.

During the production of oil and gas large amounts of solids, for example, sand or chalk, can be produced. The amount and type of solids can vary from reservoir to reservoir and from well to well. It can also vary during the life of the reservoir/well. For example, as the reservoir pressure decreases during production, the stress state of the matrix rock in the reservoir changes. Such changes can result in increased stress in the matrix so that mechanical failure can occur resulting larger amounts of sand production (if it is a sandstone reservoir). The original pressure in the reservoir supported the rock formation and when this is removed through production, the matrix itself has to support the weight of the formation above and this increase in stress state results in sand production. As another examples Enhanced Oil Recovery (EOR) techniques such as water or gas injection can cause an increase in the amount of sand being swept into the production well. Whatever the mechanism the production of sand (and other materials) entrained in the oil and/or gas product stream can cause many issues for the operator (for example, Oil Company) of the reservoir. In particular, sand in the production will cause erosion in pipelines and downstream equipment. It can also result in clogging of process equipment, e.g., valves and pumps, resulting in higher maintenance costs and loss of production during this maintenance. Maintenance operations can be very costly and can have a significant impact on the efficiency and economics of the process system and reservoir. This is particularly acute in offshore environments where such operations are logistically difficult and therefore more expensive.

In addition to the adverse effects of erosion and the loss of production during maintenance, any sand must be removed from the production stream before it can be delivered and it must be disposed of in an environmentally acceptable manner. In an offshore environment it cannot be simply pumped into the sea because the sand particles themselves are coated with hydrocarbons and therefore represent a source of pollution. Either the sand is transported on shore to be treated for disposal or it needs to be cleaned to an acceptable level offshore before disposal into the sea. Today solutions for cleaning offshore are not very efficient and transportation is very costly. In some cases the separated solids particles are re-injected into another well, however, this is also a costly solution.

There are many types of particle (e.g., sand) separators presently available and most function according to the centrifugal principle where a vortex is generated in the separator so that particles are thrown against the internal wall by centrifugal forces and fall to the bottom of the vessel for collection. The produced fluids leave the vessel through an upper outlet. However, such solutions usually work at certain flow rates and have a reduced efficiency if the production rate changes. If it is too high significant erosion takes place in the vessel and at lower rates the centrifugal effect is reduced so that solids particles leave the vessel with the produced oil and/or gas. In addition, the vortex generated in the vessel can sometimes pick up the collected sand at the bottom of the vessel and drag it into the output stream. As a result of the above, often such equipment has a narrow window of production flow rate in which it will operate efficiently.

Sand washing systems are presently used but these systems generally rely of water/chemical jetting of the sand (sometimes with hot water) involving heavy pumps with repeated flushing. They have a large footprint, which can cause issues on offshore platforms - on such structures deck space and load capacity is very costly. Because their efficiencies are generally not that high, the residence time for sand particles is high (due to rewashing) and it can be difficult to get solids particles that are clean enough to meet regulation requirements for disposal at sea. In addition, the dirty water must also be treated for disposal.

The present inventors have worked to establish technical solutions to the above restrictions associated with technology presently used in the industry or disclosed in the prior art.

US-A-3850816 discloses a cyclone for separating specifically heavier substance from flowing media containing the substance includes a cylindrical part, a conical part connected to said cylindrical part, and an inlet duct for the flowing media communicating at an end thereof with the cylindrical part, the end of the inlet duct being generally in the form of a venturi nozzle and including in succession a continuously narrowing first duct part, a second duct part of uniform cross section connected thereto, and a continuously widening third duct part connected to the second duct part, the second duct part having a cross sectional area of at most 0.05 D2, where D is the diameter of the cylindrical part, at least the second and third duct parts being curved spirally about the axis of the cylindrical part and being connected to the cylindrical part so as to supply the flowing media in substantially tangential direction into the cylindrical part.

The present invention provides an apparatus for separating solid particles from a hydrocarbon-containing fluid produced from an oil and/or gas production facility according to claim 1; and a method of separating solid particles from a hydrocarbon-containing fluid produced from an oil and/or gas production facility according to claim 10. Preferred features are defined in the respective dependent claims.

In particular, the preferred embodiments of the present invention can provide an apparatus, which integrates the separation and cleaning of sand or chalk particles (note that through this description solids, solids particles and sand are used interchangeably as sand is the most common solids produced) from production flow in a compact system that reduces the requirement for a large footprint on an offshore platform. However, it will be appreciated by those skilled in the art that such a system has wide application both offshore and on land-based oil and gas production facilities. It will also be understood that the individual element of the system can be used independently of each other, e.g., the sand separator without the washing component or with some other solids treatment system and all such combinations are anticipated.

The present invention accordingly can preferably provide apparatus and/or methods for the separation of solids/sand from oil and gas production fluids, the cleaning of said solids/sand to a level that is environmentally acceptable for disposal at sea. In addition the system provides a means to automatically collect representative solids particles samples in order to continuously evaluate the efficiency of the system.

According to a first preferred aspect of this invention there is provided a system comprising a Dynamic Solids Separator, Solids Buffer and Washing Plant and at least one Production Sample bucket.

According to a second preferred aspect of this invention the Dynamic Solids Separator comprise an upper spiral inlet channel that has an inlet cross-sectional area that is greater than the channel outlet cross-sectional area such that the velocity of the fluids exiting the spiral channel is greater than the velocity entering it.

According to a third preferred aspect the inlet of the spiral channel is of circular cross-section and the outlet is of rectangular cross-section.

According to a fourth preferred aspect of this invention the spiral channel starts on a larger diameter at the inlet and ends on a smaller diameter at the outlet.

According to a fifth preferred aspect of the invention the spiral channel starts at one azimuth and ends on a second azimuth thus inducing an exit rotation to the fluid exiting the spiral channel.

According to a sixth preferred aspect of this invention there is provided a rectangular flow restrictor on the spiral channel outlet that can be used to control the exit velocity of fluids leaving the channel.

According to a seventh preferred aspect the flow restrictor is spring loaded such that when the pressure drop across the spiral channel reduces due to a reduce flow rate of fluid entering the channel, the flow restrictor closes slightly to further restrict the flow and thus increase the fluid exit velocity.

According to an eighth preferred aspect of this invention the flow restrictor is mechanically operated by, for example, manual movement or by a hydraulic or electrically actuation system. The actuator being controlled to maintain, or achieve a certain pressure drop across the spiral channel, or to maintain/obtain a certain exit fluid velocity.

According to a ninth preferred aspect the upper spiral inlet section and flow restrictor are fabricated from wear resistant material or is internally coated with a wear resistant material such as Tungsten Carbide, Ceramic, Rubber etc.

According to a tenth preferred aspect of this invention the upper spiral section inlet section is fabricate using a HIPing process employing specialist wear resistant material or alloys that have been formulated to provide high wear resistance.

According to an eleventh preferred aspect there is an exit pipe leaving through the top of the upper section through which produced fluids (cleaned of solids) will exit the Dynamic Solids Separator.

According to a twelfth preferred aspect of this invention the Dynamic Solids Separator has a lower section that comprises an inverted conical element where the diameter reduces as the distance from the top increases and is connected to a cylindrical lower pipe from which separated solids particles are collected.

According to a thirteenth preferred aspect of this invention there is a method of controlling the aperture created by the flow restrictor that comprise the steps:
1) Ramp the flow rate from the well to the desired production rate.
2) Determine the amount of sand exiting the top of the Dynamic Solids Separator entrained in the cleaned fluids and the amount of sand exiting the bottom of the Dynamic Solids Separator, that is, separated solids.
3) Adjust the position of the flow restrictor according to other aspects of this invention to change the pressure drop and velocity across the spiral channel

Repeat steps 2 and 3 until the sand exiting the top of the Dynamic Solids Separator is minimised and/or the amount of separated sand leaving the bottom is maximised

According to a fourteenth preferred aspect of this invention the mid and lower sections of the Dynamic Solids Separator are straddled internally by a conical element that acts as a particle diffuser and vortex stopper.

According to a fifteenth preferred aspect of this invention the distance between the apex of the conical particle diffuser and the bottom of the cylindrical produced fluids exit pipe is between 0.5 and 1.5 times the diameter of the exit pipe. Preferably it is 1.0 times the diameter of the exit pipe.

According to a sixteenth preferred aspect of this invention the separated particles collection pipe at the lower end of the Dynamic Solids Separator enters a solids collection bucket though a hole in the top of the said bucket. The pipe and hole are loosely sealed to prevent particles leaving the bucket but the loose seal is not pressure tight and allows relative movement between the pipe and the solids collection bucket.

According to a seventeenth preferred aspect of this invention the solids collection bucket is mounted on a weight load-cell that measures the downward force on the bucket. There is also provided a pressure sensor that measures the internal pressure in the Dynamic Solids Separator.

According to an eighteenth preferred aspect of this invention the outputs from the weight load-cell and the pressure sensor are connected to a controller which compensates the weight load-cell measurements for variations in the internal pressure in order to provide an accurate measurement of the weight of the solids particles collected in the solids collection bucket. The controller is connected to a display/monitor that provides a continuous reading of the weight of solids in the collection bucket.

According to a nineteenth preferred aspect of this invention there is provided a solids particles flushing component that comprises a lower annular pipe that has an inner collection pipe. The lower annular pipe is connected to the outside of the solids collection bucket and through the wall of the Dynamic Solids Separator wall to a water supply. The inner collection pipe is connected to the outside of the solids collection bucket through the wall of the Dynamic Solids Separator to the Solids Buffer and Washing Plant. The pipes through the annulus between the solids collection bucket and wall of the Dynamic Solids Separator allow relative movement between the two.

According to a twentieth preferred aspect of this invention the weight of solids collected in the solids collection bucket is used to trigger the flushing of the collected solids by pumping water through the lower annular pipe, which fluidises the solids particles in the solids particle collection bucket so that a mix of water and solids particles are pumped through the inner solids collection pipe. Once the weight of solids particles in the solids particle collection bucket is reduced the flushing pump is switch off. Such flushing events can be controlled automatically or manually.

According to a twenty-first preferred aspect of this invention, the Solids Buffer and Wash Plant comprises a low-pressure particle separator, an oil/water separator and a Sand Tank with a flushing system.

According to a twenty-second preferred aspect the separated solids particles and water mix exiting the Dynamic Solids Separator represent an input stream into the second particle separator, which operates in the same manner as the Dynamic Solids Separator, where the sand removed from the input is collected in the Sand Tank and the oil stripped off the sand particles, while scratching cyclonic inner wall along with the water in the input stream, exit through the top of the low-pressure particle separator.

According to a twenty-third preferred aspect of this invention the oil/water mix exiting the low-pressure particle separator is an input stream to the oil/water separator. The oil removed is thus drained from the system and the water can be re-circulated to the Sand Tank flushing system.

According to a twenty-fourth preferred aspect of this invention the Sand Tank is instrumented with a load-cell and pressure sensor to obtain the weight of sand particles collected in the tank is a similar manner as described in other aspects of this invention. It should be noted that the Sand Tank is generally much larger (e.g.., 10 times) than the solids collection bucket in the Dynamic Solids Separator.

According to a twenty-fifth preferred aspect of this invention the Sand Tank is equipped with the same type of solids particles flushing system as is used in the solids collection bucket in the Dynamic Solids Separator. In addition, the particle flushing system can be automatically turn on or off by the weight sensor controller. Also, recycled water as described in other aspects and/or freshwater can be used for the flushing system.

According to a twenty-sixth preferred aspect the cleaned sand particles and water exiting the Solids Buffer and Wash Plant flushing system can either be pumped into the platform well re-injection system or directly into the sea or can be injected back into the low-pressure particle separator to be re-circulated and thus additionally cleaned by the Solids Buffer and Wash Plant.

According to a twenty-seventh preferred aspect of this invention there is provided one or more Production Sample Weight Bucket(s) that can take samples from the Solids Buffer and Wash Plant flushing system and comprise; a sample bucket, a load-cell, a pressure sensor, a controller and a sample bucket flushing system as described in other aspects of this invention.

According to a twenty-eighth preferred aspect of this invention there is provided a method of solid particles separation and cleaning thereof that comprises several process cycles:
1) Production fluids are passed through a 1^{st} Dynamic Solids Separator (DSS)
2) When the particles collected in the solids collection bucket of the 1^{st} DSS have reach a certain amount, the production fluids are switched to flow through a 2^{nd} and parallel DSS. At the same time, the particles collected in the 1^{st} DSS are flushed into the Solids Buffer and Wash Plant.
3) When the particles collected in the solids collection bucket of the 2^{nd} DSS reach a certain amount, production fluids are directed back to the 1^{st} DSS and the solids collected in the 2^{nd} DSS are flushed into the Solids Buffer and Wash Plant. Steps 1 through 3 are continuously repeated.
4) While production is flowing through either the 1^{st} or 2^{nd} DSS, solids particles collected are recycled through the Solids Buffer and Washing Plant until samples collected in a Production Sample Bucket and analysed (using methods known to those skilled in the art) indicate that they are sufficiently cleaned of oil to be disposed in an environmentally safe manner. Once this is the case, solids in the Sand Tank may be flushed out of the Solids Buffer and Washing Plant.

In a twenty-ninth preferred aspect of this invention, real-time weights of solids particles collected measured by the Dynamic Solids Separator and/or by the Solids Buffer and Washing Plant and/or by a Production Sample Weight Bucket are recorded, stored and analysed to provide information relating to the changes in reservoir production behaviour as a result of continued extraction of oil and gas. As an example, increases in sand production can be a precursor to the production of water and it may be beneficial to choke back the production rate from a particular well (or zone) when this is detected in order to increase the overall production from the reservoir. This can have a significant impact on the value of the reservoir.

Hereinafter, the present invention will now be described in more detail with reference to the accompanying figures, in which exemplary embodiments of the invention are shown.
Figure 1 shows a schematic illustration of a solids particles separation and washing system according to one embodiment of the present invention.
Figures 2, 3 and 4 show schematic illustrations of a dynamic solid separator in the system of Figure 1.
Figure 5 shows a schematic illustration of an oil separator in the system of Figure 1.
Figure 6 shows a schematic illustration of a production sampling and weight bucket in the system of Figure 1.
Figure 7 schematically illustrates the system of Figure 1 in a flushing circuit mode.
Figure 8 schematically illustrates the system of Figure 1 in a solids washing mode.
Figure 9 schematically illustrates the system of Figure 1 in flushing cleaned solids mode.

The invention may, however, be embodied in many different forms and should not be construed as being limited to the embodiments set forth herein; rather, these embodiments are provided so that this disclosure will be thorough and complete, and will fully convey the concept of the invention to those skilled in the art.

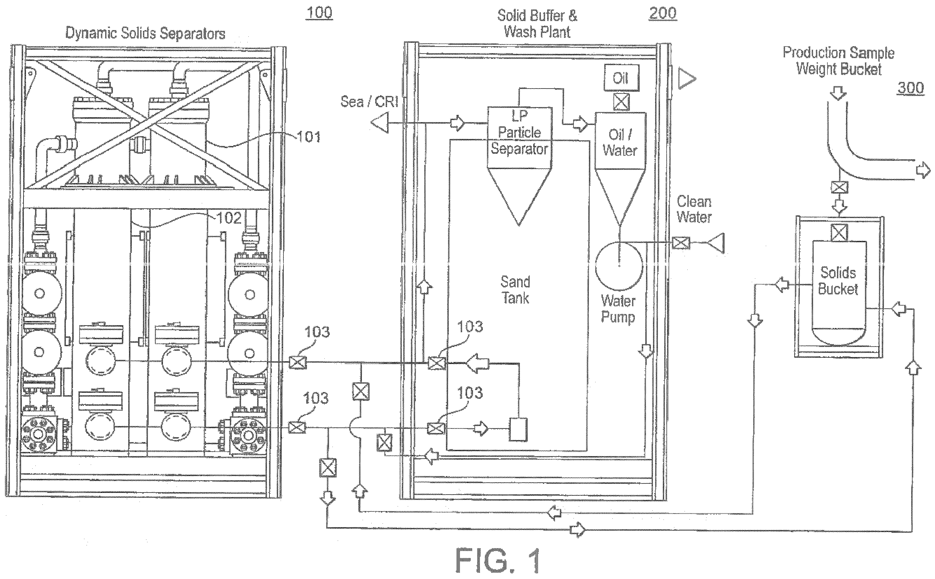

Referring to figure 1 there is shown a schematic of a solids particles separation and washing system. The key elements of the system are: the Dynamic Solid Separators, 100, where two are shown 101 and 102, the Solids Buffer and Wash Plant, 200 and one Production Sample Weight Bucket, 300. It should be noted that the system could have more than one Production Sample Weight Bucket(s).

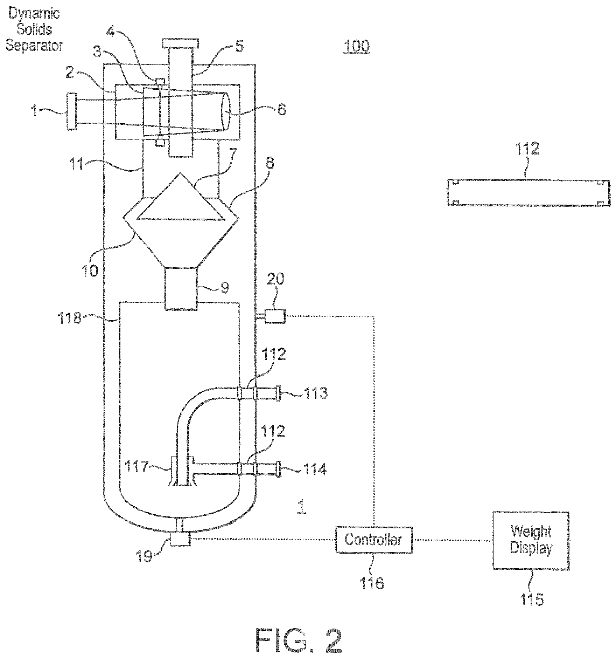

Figures 2, 3 and 4 show schematics of one of the Dynamic Solids Separators.

In figure 2 the main components of the separator are shown and can be conveniently broken down into an upper, mid and lower section. The upper section with labels 1 through 6 represents the dynamic cyclone part of the separator. The mid-section labelled 7 through 11 represents the particle diffusion and cleaned product outlet, 5. Finally the lower section labelled 412 through 418 illustrates the solids collection and flushing components.

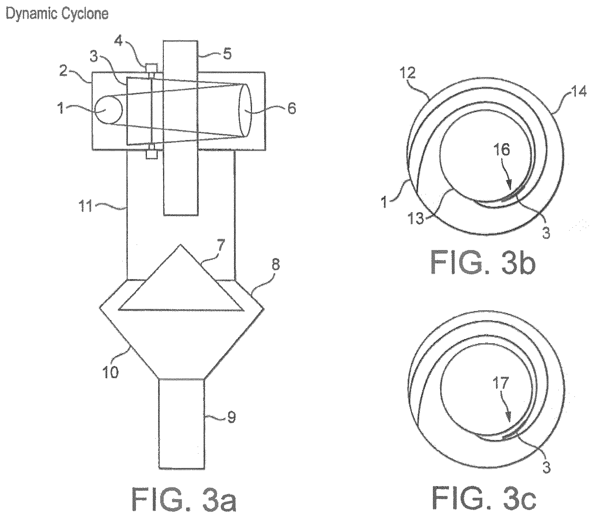

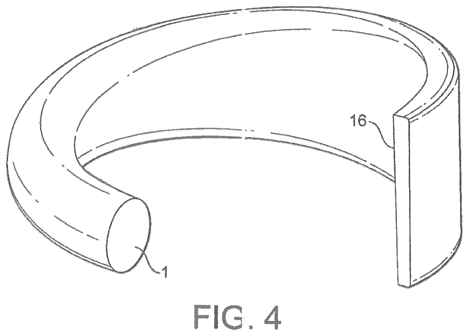

In figure 3 in shown a more detailed illustration of the dynamic cyclone or upper section of a separator. The flow from an oil or gas well enters the separator through the inlet labelled 1. This inlet is generally circular and the start of a spiralled channel section that accelerates the flow velocity as the cross-sectional area of the channel is reducing along its length. A perspective view of the channel is shown in figure 4. In this embodiment, the channel inlet has a circular cross-section and the channel exit is rectangular. The area of the rectangular exit is ~25% less than the area of the circular inlet giving rise to a flow velocity acceleration. In addition to accelerating the fluid through the channel, it is also designed to impart a rotational or circular motion to the fluid flow as it exits the spiral channel. This is achieved by arranging that the inlet 1 is at one azimuth and the channel exit 16, shown on figure 3b, is on a different azimuth with the rotation from 1 to 16 being between 235 to 270 degrees. This can also be seen in figure 4. In addition to the change in azimuth, it will also be appreciated from figure 3b and 3c that the inlet is on a large diameter, 12 than the exit, which at the lower diameter labelled 13. This arrangement provides additional flow acceleration and rotation. It will be appreciated by those skilled in the art that the reduction in channel cross-section area and the change from a circular inlet to a rectangular outlet, can take many different forms. With the primary objectives to accelerate and rotate the flow entering the dynamic cyclone section.

In figures 3a, 3b and 3c there is shown a flow restrictor component labelled 3. This component can be used to reduce the spiral channel exit cross-section area even further. There is provided a controlling mechanism 4 for this purpose. The component 4 can be spring loaded so that the exit area adjusts automatically in response to the pressure drop across the spiral channel. For example, as the flow velocity in the channel reduces due to, for example, lower production rates from the well, the pressure drop in the channel reduces and the spring-loaded restrictor closes a bit in order to reduce the channel exit area, increase the pressure drop at the channel exit and thus increase (or maintain) the velocity of the fluids exiting the channel. This is illustrated in figure 3c where reduction in pressure drop across the channel causes a change in spring force, 17, resulting in the restrictor reducing the channel exit cross-sectional area. The spring coefficient can be predetermined to provide a response over a defined range of pressure drops. This component creates a dynamic velocity regulating function that leads to significant improvements over solutions in the prior art. In other embodiments, the regulator 4 can be an adjustment screw that can be accessed from outside the unit and which can be manually rotated to increase or decrease the exit cross-sectional area. In other embodiments, 4 can be adjusted using electric or hydraulic actuation systems (not shown) that are linked to measurements that provide the pressure drop across the spiral channel or the flow exit velocity. As the pressure drop increases or decreases the flow restrictor 3 is automatically opened or closed to regulate the pressure drop and thus the exit flow velocity from the spiral channel. Those skilled in the art will be familiar with measurements and actuator systems commonly used for this type of regulator.

Fluids exiting the spiral channel enter the top section of the particle separator at 16. The fluid is rotating rapidly and as a result particles in the fluid are thrown outwards by the centrifugal forces on the particles and become separated from the fluid flow. This is a function of particle size and large particles will experience larger forces than smaller one. The phenomenon is well understood and used in commercial Hydrocyclones, see http://www.energy.siemens.com/hq/en/industries-utilities/oil-gas/portfolio/water-solutions/hydrocyclones.htm. However, the dynamic velocity adjustment mechanism is designed to ensure correct pressure drop and flow velocity so even very fine particles are separated. A vortex is created in the unit with fluids rotating in the section 11 flowing downwards into the unit where it is disrupted by the particle diffuser, 7. As the fluids continue to rotate in the mid-section 11 further solids particles separation takes place and the cleaned fluids exit the unit through the pipe 5. The separated particles drop out of the flow as their velocity is reduced while rotating close to inside wall, 13, of top section and the inside wall of the section 11. These particles drop and are dragged into the area between the particle diffuser, 7, and the lower section of the separator labelled 8. The diameter of the diffuser at its bottom is great that the internal diameter of 11. This ensures that the vortex is arrested and does not extend down into the area below the particle diffuser where it could pick up separated particles and drag them back up to the exit-pipe 5. The wall of 8 is expanding outwards so that the diameter of the chamber increases as the chamber progresses downwards as shown in figure 3a. However, the bottom of the chamber, 10, has an inverted conical shape so that the falling particles are collected and fall out of the unit through the pipe labelled 9. In this embodiment the cleaned fluid exit-pipe 5 has a diameter that is ¼ that of section labelled 11. Also, the tip of the particle diffuser, 7, is 1 diameter of the exit-pipe 5, below the bottom of the exit-pipe. While these dimensions are found to provide favourable results other configurations with differing dimensions are possible.

As described in this disclosure, there is provided a spiral flow channel equipped with a flow restrictor that can regulate the velocity of the fluid exiting the spiral channel in order to optimise the solids particles separation in the unit. This flow restrictor can be controlled through manual intervention or by use of an automatic monitoring system. A method is here disclosed whereby the ratio of the mass of solids particles exiting with the cleaned fluid through exit-pipe 5, and the mass of solids particles exiting through the collection pipe, 9 is used to adjust the flow restrictor so that this ratio is minimised. The process steps are:
1) Ramp the flow from the producing well into the separator unit to its operating level.
2) After a period of stable flow, a determination of the solids particles exit ratio as defined above is made. The mass of particles exiting 5 and 9 can be obtained using Production Sample Weight Buckets as described in this invention or they could be estimated using specific particle sensors, e.g., see www.clampon.no.
3) If it is assessed that the solids particles exit through the cleaned fluid outlet 5, is too high then the flow restrictor is adjusted to increase the fluid exit velocity from the spiral channel. This can be done manually or it could be automated as described in this invention.
4) Repeat steps 2 and 3 until the solids particles exiting 5 has been minimised and most are leaving through the collection pipe 9.

Once the particles have been collected and exit the dynamic cyclone through collection pipe 9, they fall into the solids collection bucket labelled 418 in figure 2. The collection pipe 9 enters the collection bucket through a hole in the top of bucket 418, which is sealed to prevent particles exiting between collection pipe 9 and collection bucket 418 but allows some differential movement between the collection bucket 418 and the collection pipe 9. For example, an elastomer grommet could be used. During operation of the solids separator, 100, the solids collection bucket 418 will continue to fill with particles. The collection bucket, 418, is placed on a load-cell, 19, which measure the downward force on the bucket. Changes in this force is the result of two components: the changing weight of solids in the bucket and variations in the internal pressure in the unit. In order to correct for the variations in pressure a separate pressure sensor, 20, is provided. The outputs from both the load-cell 19 and the pressure sensor 20 are fed into a controller 416. This computes the weight of the solids particles separated by the system and collected in the solids collection bucket. There is also provided a real-time display connected to the controller showing the weight of solids particles collected in the bucket. It should be noted that the controller can also be connected to other computers or recording devices (not shown) to allow for real-time analysis and storage of the data and analysis. In particular, the controller can also be connected to pumps used in the flushing system that are triggered when the weight of collected solids particles reaches some threshold. When is occurs, the flow from the well is switched to flow through the second Dynamic Solids Separator and flushing of the collected solids particles in the collection bucket can take place.

The flushing system comprises a water inlet 414, an annular fluidiser 417 and a water/solids outlet 413. The inlet 414, and outlet 413 are connected through annular gap between the wall of the Dynamic Solids Separator and the solids collection bucket using a section of pipe 412. These sections of pipe have 'O' rings at each end and are slightly rounded at each end so that they allow relative movement between the sample collection bucket 418, and the solids separator body. This provides that the sample collection bucket 418 is coupled to a solids removal pipe 413 by a first flexible connector, such as an O-ring and to a liquid flushing pipe 414 by a second flexible connector, such as an O-ring. That is the bucket can move slightly as the weight of collected solids particles varies, as more solids are collected and as solids particles are flushed from the unit. Water injected into inlet 414 enters the annular fluidisation component. This component comprises downward jets that fluidises the solids particles and forces the resulting mixture of water and solids particles up through the central collection pipe 413 as the pressure in the bucket increases. Generally a mixture of 50/50 water and solids particles is flushed from the solids collection bucket. As collected solids particles are flushed from the collection bucket, the weight of solids as provided by the controller decreases. Once most of the collected particles have been flushed from the unit, the flushing pumps are switched off and fluid from the well can be directed into the dynamic cyclone once more. The solids particles flushed from the Dynamic Solids Separator represent the input flow to the Solids Buffer and Washing Plant as shown in figure 1 and by appropriate arrangement of the valves labelled 103. It should be noted that all of the valves shown through this invention can be operated manually or can be operated through an appropriate control system that will be appreciated by those skilled in the art and which is not shown.

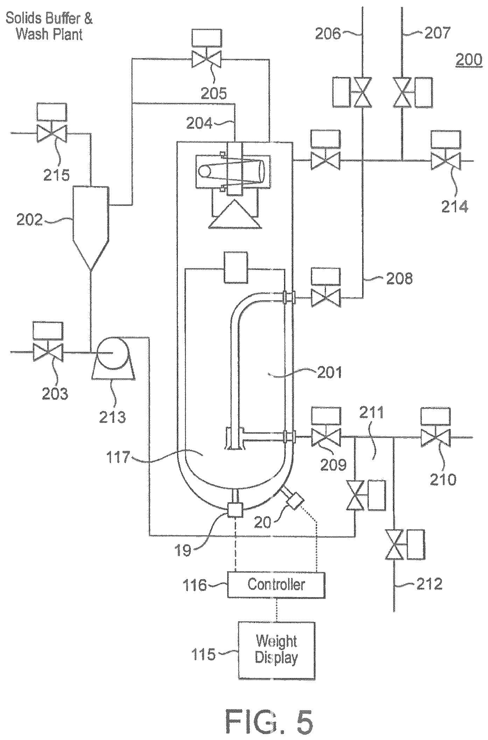

The operation of the Solids Buffer and Washing Plant will now be described with reference to figure 5. As is shown in figure 5, the plant has a solids particles separator unit and collection system, 201, which comprise the same components as the Dynamic Solids Separator as previous details in this invention. The key difference is that this unit functions at a low-pressure while the Dynamic Solids Separators operate at the higher well production pressure. Also, the Sand Tank in the wash plant is significantly larger than the solids collection bucket in the solids separators. Generally it is ~10 times larger so that many cycles of flushing from the Dynamic Solids Separators can be buffered and treated at any one time. However, the operation of the component 201 is that same as the Dynamic Solids Separators already described, including its flushing fluidization component, 417, and solids buffer collector bucket weight measurement elements, that is, components; 19, 20, 415 and 416, that function in the same way.

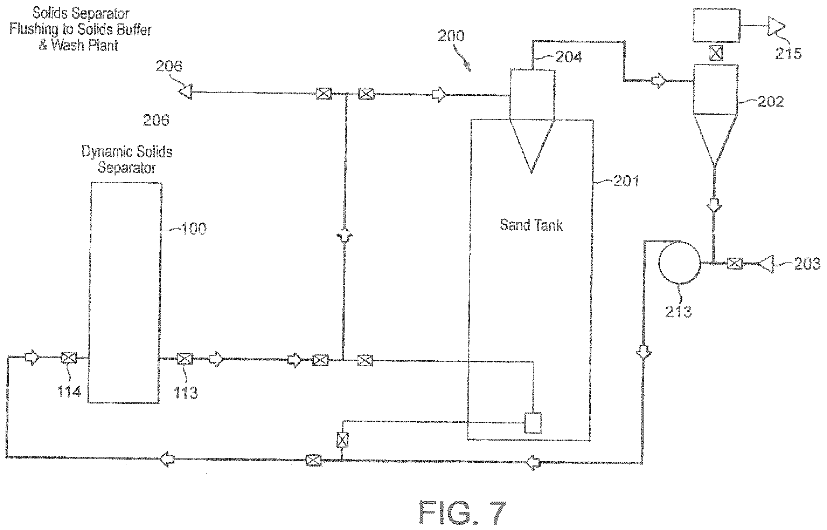

In figure 5 there is shown an oil separator, 202, that can be a cyclone or filter/absorption type or any other method that is known to those skilled in the art. In figure 5 it is shown as a cyclone, which is the preferred embodiment. There is also a water circulation pump, 213, provided along with numerous valves that can be configured to achieve a desired flow circuit and these will be described using figure 7 to figure 9. It will be noted that the circulation pump 213 is place downstream of the solids separation and cleaning components, which reduces the wear on this pump because it has clean fluids passing through it. In each of these figures, the flow-paths are shown with arrows on the pipelines. It should be noted that the component label numbers in these figures are the same as those used in figures 2 and 5.

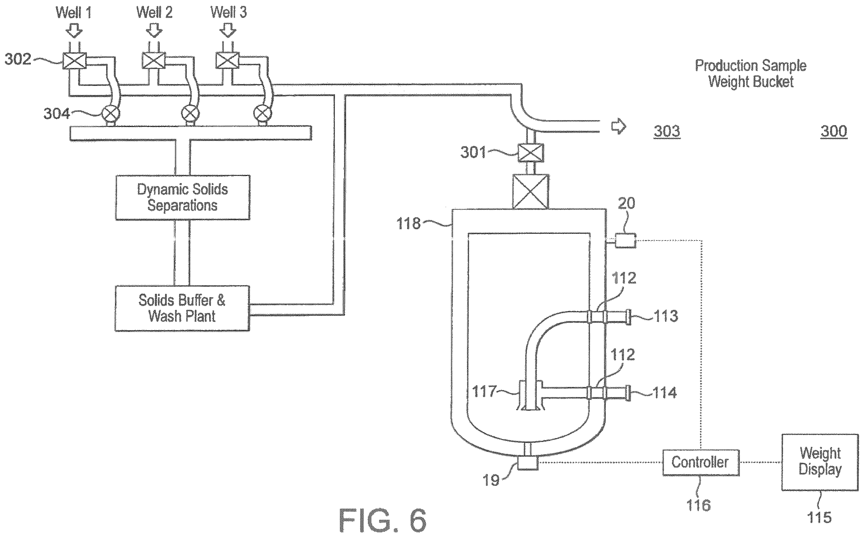

In Figure 6 is shown a Production Sampling and Weight Bucket (PSWB) installed to allow solids samples to be taken from the production flow 303. Production is flowing from a number of wells, in Figure 6, three wells are shown but this can be any number depending on the oil and gas field configuration. Each well has valves labelled 302 and 304 that can be operated manually or automatically controlled by a computerised process system, not shown, to either direct flow directly to the production flow stream 303 or through the Dynamic Solids Separators and Solids Buffer and Wash Plant. The Production Sample Weight Bucket is 'T' off the production flow manifold where the valve 301 controls flow into the Production Sample Weight Bucket. The PSWB can be arranged to collect samples continuously or periodically are required. Its operation is exactly as described above for the solids collection bucket 418, shown in figure 2 and the collection of solids in the sand tank 201, shown in figure 5. Once the sample bucket is full as determined by the controller 416 and as described in other embodiments of this invention, valve 301 is closed and the bucket is flushed into the Solids Buffer and Wash Plant as described elsewhere. During sample collecting the rate at which sand is collected in the PSWB is recorded by the controller 416 and is used to provide an indication that the sand content of the production flow is increasing. If excessive sand production is occurring it is possible selectively to shut each well one at a time (or in groups) in order to identify which well (or group of wells) is producing more sand. The production from this well (or group of wells) can then be selectively routed through the Dynamic Solids Separator, that is, through the inlet labelled 1 in Figure 2 and then through the Solids Buffer and Wash plant as described elsewhere. The manifolds and piping required to make this happen are shown schematically in figure 6 but will depend on the platform configuration. The system shown in Figure 6 allows the automation of the solids separation unit and the solids buffer and wash plant providing a more efficient production platform. The system in figure 6 could equally be operated manually using readings recorded and shown in real-time on the display 415.

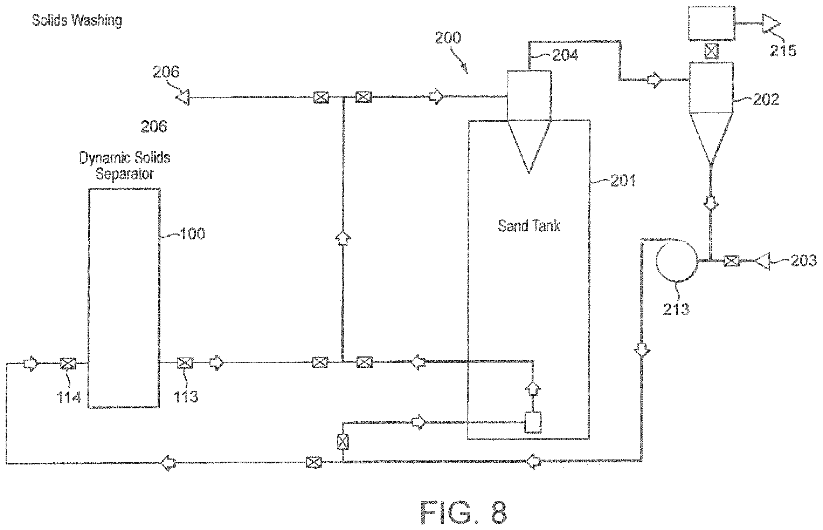

Figure 7 illustrates the flushing circuit where solids separated in the solids separated collection bucket 418 are removed from the Dynamic Solids Separator to the Solids Buffer and Wash Plant 200. In figure 7 the particular solids separator that is being flushed is no longer receiving fluids from a well, as described previously, and fresh water is pumped from the inlet 203 using pump 213 into the fluidiser in the sample separator 100, through the inlet 414. Solids and water leaving the solids collection bucket through exit 413 are circulated into the Solids Buffer and Wash Plant 200 as shown in figure 7. As the solids flow through the solids particle separator 201 and are cleaned through the centrifugal process (as described in other embodiments of this invention), oil and water collected will exit from 204 in figures 5, 7, 8 and 9. The cleaned solids will drop into the sand tank in the solids buffer and wash plant 201. The oil/water mix exits through 204 and enters the oil separator 202. The separated oil from this component exits into the 'dirty collection tank' (not shown) through 215. From there it will be disposed of by the usual environmentally acceptable manner or may enter the produced oil stream from the well. The separated water from 202 exits to be circulated using pump 213 back to the inlet 414 on the sample separator fluidisation flushing system and exits with solids through outlet 413. This circulation continues until the Dynamic Solids Separator solids collection bucket has been emptied. Once this has occurred, the Dynamic Solids Separator can be put back on-line to accept fluids from the well and the Solids Buffer and Wash Plant switches into a solids washing mode as shown in figure 8.

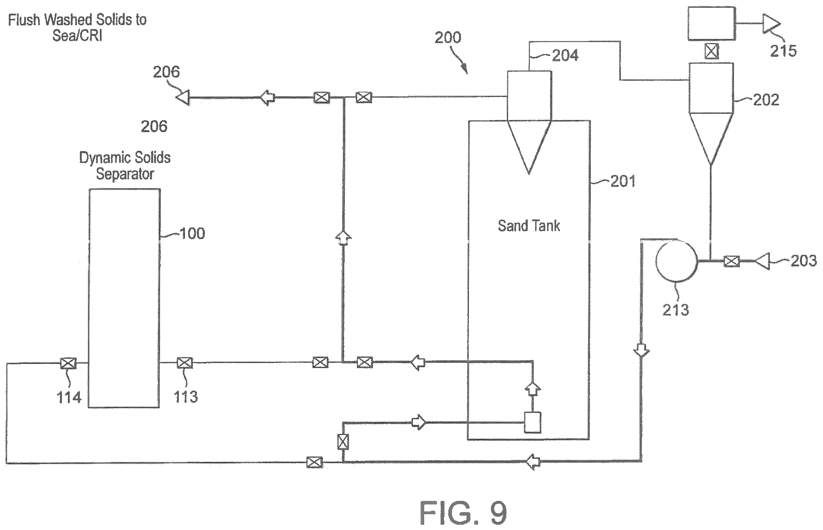

In figure 8 the appropriate valves are opened/closed in order to continually circulate the collected solids from the dynamic solids separator, 100, through the solids buffer and wash plant. It will be appreciated by those skilled in the art, that the valves and pumps used through the system can be operated manually or can controlled using an automated system (not shown). During this process fresh water and/or washing chemicals enter the circuit when required through 203. The solids and water/chemicals continually circulate through the system as shown in figure 8. On each cycle through the system, the solids are cleaned to a greater extent until such point that they carry minimal amounts of oil and are judged to be sufficiently clean to be disposed of by pumping them into the sea. This occurs using the circuit defined in figure 9. In order to analyse the cleanliness of the solids particles, sample can be collected at any time using the Production Sample Weight Bucket as shown in figure 1, 300, and detailed in figure 6. It would also be possible to use a multiphase flow meter to measure the oil/water ration of the flow leaving 204 and when the oil content is below a certain amount then further cleaning is not necessary. In addition, the MPFM can be utilised on any flow line within the system to determine the rates of any of the different phase (Oil, Gas, Water and Solids) within the flow and to further use this information to control the different steps in the process, e.g., adjust the inlet flow velocity to optimise the process.

Figure 9 shows the flow circuit to flush the cleaned solids from the sand tank in the Solids Buffer and Washing Plant. In this case, fresh or seawater enters through 203 and is pumped through the fluidisation flushing system in 201 using pump 213. The water and cleaned solids particles mix exits the flushing system and is pumped into the sea through 206 or into a cleaned solids collection tank (not shown) as shown in figure 9. Flushing continues until most of the cleaned solids particles have been removed from the sand tank as indicated by the solids weight system; 19, 20, 415 and 416, as shown in figure 5. Once this is complete, the flow circuit on the Solids Buffer and Washing Plant can be change to another mode, for example, to flush more separated particles from a Dynamic Solids Separator solids collection bucket into the solids.

Using the apparatus described in this invention, fluids flowing from an oil well or group of oil wells, can have the solids removed. In addition, the solids separated can be cleaned of oil to a degree that allows for cost effective disposal of such particles. It also allows the oil remove for the said solids particles to be collected for potential feeding into the production stream thus extract as much usual production as possible. Such a system provides significant advantages over present day practice and the prior art.

## Claims

1. An apparatus for separating solid particles from a hydrocarbon-containing fluid produced from an oil and/or gas production facility, the apparatus comprising a spiral channel having an axis, an inlet (1) and an outlet (16), the inlet being further from the axis than the outlet, the inlet having a first shape and a first cross-sectional area and the outlet having a second shape and a second cross-sectional area, wherein the first cross-sectional area of the inlet is larger than the second cross-sectional area of the outlet, wherein the first and second shapes are different and the spiral channel is adapted to change a shape of the cross-sectional area of the fluid exiting the outlet as compared to a shape of the cross-sectional area of the fluid entering the inlet, a flow restrictor (3) located at the outlet for controlling an outlet velocity of the fluid by controlling the second cross-sectional area of the outlet, a vortex chamber (11) beneath the channel for receiving a spiral flow from the channel, a first collector (9, 118) for solid particles beneath the vortex chamber and a fluid conduit (5) for conveying fluid away from the vortex chamber.

2. An apparatus according to claim 1 wherein the inlet (1) has a substantially rounded cross-section and the outlet (16) has a substantially polygonal cross-section, optionally wherein the inlet has a circular cross-section and the outlet has a rectangular cross-section.

3. An apparatus according to any foregoing claim wherein (i) the outlet has a cross-sectional area from 10 to 40%, optionally from 20 to 30%, further optionally about 25%, less than the cross-sectional area of the inlet and/or (ii) the spiral channel extends over a rotational angle of from 200 to 300 degrees, optionally from 235 to 270 degrees; and/or (iii) the spiral channel is adapted to induce a spiral flow in the fluid exiting the outlet, and/or (iv) the spiral channel is adapted to increase the velocity of the fluid exiting the outlet as compared to a velocity of the fluid entering the inlet.

4. An apparatus according to any foregoing claim wherein the flow restrictor (3) is biased to provide control of the outlet velocity of the fluid, further optionally wherein the flow restrictor is biased additionally to control a fluid pressure at the outlet (16) dependent upon fluid pressure acting on the flow restrictor or wherein the bias of the flow restrictor is adapted automatically to control the outlet velocity of the fluid within a desired range.

5. An apparatus according to any foregoing claim further comprising an actuator (4) for controlling the position of the flow restrictor (3) thereby to control the outlet velocity of the fluid within a desired range by controlling the second cross-sectional area of the outlet (16).

6. An apparatus according to any foregoing claim wherein the fluid conduit (5) extends upwardly out of the vortex chamber (11), preferably wherein the fluid conduit has a width which is from 10 to 40%, optionally from 20 to 30%, further optionally about 25%, of a width of the vortex chamber.

7. An apparatus according to any foregoing claim further comprising a conical element (7) at a lower end of the vortex chamber (11), the conical element having an upper tip, a lower edge, and a conical surface progressively increasing in radius in a direction extending from the tip to the lower edge, the lower edge being received in a diffuser pipe (10) extending downwardly from the vortex chamber towards the first collector, optionally wherein the lower edge has a larger diameter than a width of the vortex chamber and in the vicinity of the lower edge the diffuser pipe has a larger width than the diameter of the lower edge to provide an annular flow path for solid particles downwardly past the conical element from the vortex chamber towards the first collector, further optionally wherein (A) a distance between the upper tip and a lower end of the fluid conduit is from 0.5 to 1.5 times, optionally about 1 times, a width of the fluid conduit, and/or (B) the first collector is a bucket (118) and a pipe element (9) extends from the diffuser pipe into the bucket through a hole at a top of the bucket.

8. An apparatus according to any foregoing claim (A) further comprising a weighing device (19) for weighing an amount of solid particles collected in the first collector (118), optionally the apparatus further comprising a pressure sensor (20) for measuring internal fluid pressure in the vicinity of the first collector (118) and a controller (116) for compensating the weight measured by the weighing device based on variations in the internal fluid pressure measured by the pressure sensor, further optionally wherein the first collector is supported by, or selectively engageable by, the weighing device so as to have substantially unrestricted vertical movement when supported by or engaged by the on the weighing device.

9. An apparatus according to any foregoing claim further comprising a solids washing unit connected to the collector, the washing unit comprising a liquid flushing pipe (114) for conveying a fluidising fluid into a lower portion of the first collector (118), a solids removal pipe (413) for receiving a fluidised flow of solid particles in the fluidised fluid from the lower portion of the first collector, a particle separator (201) for receiving the fluidised flow and separating solid particles from the fluid, and a second collector (117) for receiving the solid particles from the particle separator, optionally wherein the first collector is coupled to the solids removal pipe by a first flexible connector or wherein the first collector is coupled to the liquid flushing pipe by a second flexible connector, optionally (A) the apparatus further comprising a fluid cleaner (202) connected to the particle separator for cleaning fluid separated by the particle separator, optionally wherein the fluid cleaner comprises at least one of a centrifugal separator, a filter, an absorber or any combination thereof for separating oil and an aqueous fluid, the apparatus further optionally further comprising a return conduit for selectively connecting a water outlet of the fluid cleaner to the first collector (118) or the second collector (117); and/or (B) the apparatus further comprising a pump (213) which is located downstream, in the direction of fluid flow, from an outlet of the particle separator; and/or (C) wherein the apparatus comprises a plurality of separation units (101), each separation unit comprising the spiral channel, the vortex chamber, the first collector and the fluid conduit, and the solids washing unit is connected to the plurality of separation units and adapted to receive solid particles from the respective first collectors simultaneously or sequentially.

10. A method of separating solid particles from a hydrocarbon-containing fluid produced from an oil and/or gas production facility, the method comprising the steps of: (i) introducing a flow of a mixture of solid particles in a hydrocarbon-containing fluid as a spiral flow into a vortex chamber (11); (ii) collecting solid particles beneath the vortex chamber in a first collector (118); and (iii) conveying fluid away from the vortex chamber, wherein the spiral flow is generated in a spiral channel located above the vortex chamber, the spiral channel having an axis, an inlet (1) and an outlet (16), the inlet being further from the axis than the outlet to produce a radially inwardly directed spiral flow, a cross-sectional area of the inlet being larger than a cross-sectional area of the outlet, wherein the spiral channel increases the velocity of the fluid exiting the outlet as compared to a velocity of the fluid entering the inlet, and further comprising the step of controlling an outlet velocity of the fluid of the spiral flow by controlling the cross-sectional area of the outlet using a flow restrictor (3).

11. A method according to claim 10 wherein (A) the outlet (16) has a cross-sectional area from 10 to 40%, optionally from 20 to 30%, further optionally about 25%, less than the cross-sectional area of the inlet (1), and/or (B) the spiral channel extends over a rotational angle of from 200 to 300 degrees, optionally from 235 to 270 degrees.

12. A method according to claim 10 or claim 11 wherein the flow restrictor (3) is biased additionally to control a fluid pressure at the outlet (16) dependent upon fluid pressure acting on the flow restrictor or wherein the bias of the flow restrictor automatically controls the outlet velocity of the fluid within a desired range, further optionally wherein the position of the flow restrictor is controlled by an actuator (4) thereby to control the outlet velocity of the fluid within a desired range.

13. A method according to any one of claims 10 to 12 wherein (A) the fluid is conveyed upwardly out of the vortex chamber (11); and/or (B) a conical element (7) is disposed at a lower end of the vortex chamber, the conical element having an upper tip, a lower edge, and a conical surface progressively increasing in radius in a direction extending from the tip to the lower edge, the lower edge being received in a diffuser pipe (10) extending downwardly from the vortex chamber towards the first collector (118), optionally wherein the lower edge has a larger diameter than a width of the vortex chamber and in the vicinity of the lower edge the diffuser pipe has a larger width than the diameter of the lower edge to provide an annular flow path for solid particles downwardly past the conical element from the vortex chamber towards the collector; and/or (C) the solid particles are collected in a bucket (118) disposed beneath the vortex chamber (11); and/or (D) further comprising continuously or intermittently weighing an amount of solid particles collected in the first collector (118), optionally the method further comprising (a) measuring internal fluid pressure in the vicinity of the first collector and compensating the weight measured by the weighing device (19) based on variations in the measured internal fluid pressure, and/or (b) determining from the weighed amount of solid particles a variation of the solid particle content of the hydrocarbon-containing fluid with respect to time and/or with respect to different production wells.

14. A method according to any one of claims 10 to 13 further comprising conveying a fluidised flow of solid particles from a lower portion of the collector (118) to a solids washing unit connected to the first collector, optionally (A) wherein fluid is conveyed into the lower portion of the first collector from the solids washing unit to form the fluidised flow, and/or (B) wherein the fluidised flow is conveyed to a particle separator (201) for separating solid particles from the fluid, the solid particles from the particle separator being received in a second collector (117), and further optionally the method further comprising cleaning the fluid separated from solids by the particle separator by separating, optionally centrifugally separating, oil and an aqueous fluid or water, and preferably yet further comprising returning aqueous fluid or water from the cleaning step to the first collector or the second collector,
further optionally wherein the solids washing unit is connected to a plurality of separation units (101), each separation unit including a respective first collector, and the solids washing unit receives solid particles from the respective first collectors simultaneously or sequentially.

15. A method according to any one of claims 10 to 14 wherein the oil and/or gas production facility comprises a plurality of production wells coupled to an outlet manifold for delivering the hydrocarbon-containing output of the production wells to a downstream processing facility, and each of the production wells is selectively connectable by a respective valve mechanism (302, 304) either to an input for the vortex chamber or to the outlet manifold, optionally wherein the respective valve mechanism is controlled to direct the hydrocarbon-containing output of at least one of the production wells to the input for the vortex chamber either periodically or when solid particles above a particular threshold amount are detected in the respective hydrocarbon-containing output of the at least one production well.

## Patentansprüche

1. Gerät zur Abtrennung von Feststoffpartikeln aus einem kohlenwasserstoffhaltigen Fluid, das aus einer Öl- und/oder Gasproduktionsanlage stammt, wobei das Gerät einen spiralförmigen Kanal mit einer Achse, einem Einlass (1) und einem Auslass (16) umfasst, wobei der Einlass weiter von der Achse entfernt ist als der Auslass, wobei der Einlass eine erste Form und einen ersten Querschnittsbereich hat und der Auslass eine zweite Form und einen zweiten Querschnittsbereich hat, wobei der erste Querschnittsbereich des Einlasses größer ist als der zweite Querschnittsbereich des Auslasses, wobei die erste und die zweite Form unterschiedlich sind und der spiralförmige Kanal geeignet ist, eine Form des Querschnittsbereichs des aus dem Auslass austretenden Fluids im Vergleich zu einer Form des Querschnittsbereichs des in den Einlass eintretenden Fluids zu verändern, einen am Auslass angeordneten Durchflussbegrenzer (3) zum Steuern einer Auslassgeschwindigkeit des Fluids durch Steuern des zweiten Querschnittsbereichs des Auslasses, eine Wirbelkammer (11) unterhalb des Kanals zum Empfangen eines Spiralflusses aus dem Kanal, einen ersten Kollektor (9, 118) für feste Partikel unterhalb der Wirbelkammer und eine Fluidleitung (5) zum Abführen von Fluid aus der Wirbelkammer.

2. Gerät nach Anspruch 1, wobei der Einlass (1) einen im Wesentlichen abgerundeten Querschnitt und der Auslass (16) einen im Wesentlichen polygonalen Querschnitt aufweist, optional wobei der Einlass einen kreisförmigen Querschnitt und der Auslass einen rechteckigen Querschnitt aufweist.

3. Gerät nach einem der vorstehenden Ansprüche, wobei (i) der Auslass einen Querschnittsbereich von 10 bis 40 %, optional von 20 bis 30 %, ferner optional etwa 25 %, weniger als der Querschnittsbereich des Einlasses aufweist und/oder (ii) der Spiralkanal sich über einen Drehwinkel von 200 bis 300 Grad, optional von 235 bis 270 Grad, erstreckt; und/oder (iii) der Spiralkanal geeignet ist, eine spiralförmige Strömung in dem aus dem Auslass austretenden Fluid zu erzeugen, und/oder (iv) der Spiralkanal geeignet ist, die Geschwindigkeit des aus dem Auslass austretenden Fluids im Vergleich zur Geschwindigkeit des in den Einlass eintretenden Fluids zu erhöhen.

4. Gerät nach einem der vorstehenden Ansprüche, wobei der Durchflussbegrenzer (3) so vorgespannt ist, dass er eine Steuerung der Auslassgeschwindigkeit des Fluids bereitstellt, wobei ferner optional der Durchflussbegrenzer so vorgespannt ist, dass er zusätzlich einen Fluiddruck am Auslass (16) in Abhängigkeit von dem auf den Durchflussbegrenzer wirkenden Fluiddruck steuert, oder wobei die Vorspannung des Durchflussbegrenzers so angepasst ist, dass er die Auslassgeschwindigkeit des Fluids automatisch innerhalb eines gewünschten Bereichs steuert.

5. Gerät nach einem der vorstehenden Ansprüche, ferner umfassend einen Aktuator (4) zum Steuern der Position des Durchflussbegrenzers (3), um dadurch die Auslassgeschwindigkeit des Fluids innerhalb eines gewünschten Bereichs zu steuern, indem der zweite Querschnittsbereich des Auslasses (16) gesteuert wird.

6. Gerät nach einem der vorstehenden Ansprüche, wobei sich die Fluidleitung (5) nach oben aus der Wirbelkammer (11) heraus erstreckt, wobei die Fluidleitung vorzugsweise eine Breite aufweist, die 10 bis 40 %, optional 20 bis 30 %, ferner optional etwa 25 %, einer Breite der Wirbelkammer beträgt.

7. Gerät nach einem der vorstehenden Ansprüche, ferner umfassend ein konisches Element (7) an einem unteren Ende der Wirbelkammer (11), wobei das konische Element eine obere Spitze, eine untere Kante und eine konische Oberfläche aufweist, deren Radius in einer Richtung, die sich von der Spitze zur unteren Kante erstreckt, progressiv zunimmt, wobei die untere Kante in einem Diffusorrohr (10) empfangen wird, das sich von der Wirbelkammer nach unten in Richtung des ersten Kollektors erstreckt, optional, wobei die untere Kante einen größeren Durchmesser als eine Breite der Wirbelkammer aufweist und das Diffusorrohr in der Nähe der unteren Kante eine größere Breite als der Durchmesser der unteren Kante aufweist, um einen ringförmigen Pfad für Feststoffpartikel bereitzustellen, der von der Wirbelkammer nach unten an dem konischen Element vorbei in Richtung des ersten Kollektors verläuft, wobei ferner optional (A) ein Abstand zwischen der oberen Spitze und einem unteren Ende der Fluidleitung von 0,5 bis 1,5 mal, optional etwa 1 mal, die Breite der Fluidleitung beträgt, und/oder (B) der erste Kollektor ein Eimer (118) ist und ein Rohrelement (9) sich von dem Diffusorrohr durch ein Loch an der Oberseite des Eimers in den Eimer erstreckt.

8. Gerät nach einem der voranstehenden Ansprüche (A), ferner umfassend eine Wiegevorrichtung (19) zum Wiegen einer im ersten Kollektor (118) gesammelten Menge fester Partikel, optional umfasst das Gerät ferner einen Drucksensor (20) zum Messen des inneren Fluiddrucks in der Nähe des ersten Kollektors (118) und eine Steuerung (116) zum Kompensieren des von der Wiegevorrichtung gemessenen Gewichts basierend auf Schwankungen des von dem Drucksensor gemessenen inneren Fluiddrucks, ferner optional, wobei der erste Kollektor von der Wiegevorrichtung gestützt wird oder selektiv in diese eingreifen kann, sodass er eine im Wesentlichen ungehinderte vertikale Bewegung aufweist, wenn er von der Wiegevorrichtung gestützt wird oder in diese eingreift.

9. Gerät nach einem der vorstehenden Ansprüche, ferner umfassend eine Feststoffwascheinheit, die mit dem Kollektor verbunden ist, wobei die Wascheinheit ein Flüssigkeitsspülungsrohr (114) zum Fördern eines Fluidisierungsfluids in einen unteren Abschnitt des ersten Kollektors (118), ein Feststoffentfernungsrohr (413) zum Empfangen eines fluidisierten Stroms von Feststoffpartikeln in dem fluidisierten Fluid aus dem unteren Abschnitt des ersten Kollektors, einen Partikelabscheider (201) zum Empfangen des fluidisierten Stroms und zum Trennen von Feststoffpartikeln von dem Fluid und einen zweiten Kollektor (117) zum Empfangen der Feststoffpartikel von dem Partikelabscheider umfasst, wobei optional der erste Kollektor über einen ersten flexiblen Verbinder mit der Feststoffentfernungsleitung gekoppelt ist oder wobei der erste Kollektor über einen zweiten flexiblen Verbinder mit der Flüssigkeitsspülleitung gekoppelt ist, wobei optional (A) die Vorrichtung ferner einen Fluidreiniger (202) umfasst, der mit dem Partikelabscheider verbunden ist, um das durch den Partikelabscheider abgeschiedene Fluid zu reinigen, wobei optional der Fluidreiniger mindestens einen Zentrifugalabscheider, einen Filter, einen Absorber oder eine beliebige Kombination davon umfasst, um Öl und ein wässriges Fluid zu trennen, das Gerät ferner optional eine Fluidleitung zur selektiven Verbindung eines Wasserauslasses des Fluidreinigers mit dem ersten Kollektor (118) oder dem zweiten Kollektor (117) umfasst; und/oder (B) das Gerät ferner eine Pumpe (213) umfasst, die in Richtung des Fluidflusses stromabwärts von einem Auslass des Partikelabscheiders angeordnet ist; und/oder (C) wobei das Gerät eine Vielzahl von Abscheideeinheiten (101) umfasst, wobei jede Abscheideeinheit den Spiralkanal, die Wirbelkammer, den ersten Kollektor und die Fluidleitung umfasst und die Feststoffwascheinheit mit der Vielzahl von Abscheideeinheiten verbunden ist und Feststoffpartikel von den jeweiligen ersten Kollektoren gleichzeitig oder nacheinander empfangen kann.

10. Verfahren zur Abtrennung von Feststoffpartikeln aus einem kohlenwasserstoffhaltigen Fluid, das aus einer Öl- und/oder Gasförderanlage stammt, wobei das Verfahren die folgenden Schritte umfasst: (i) Einleiten eines Stroms einer Mischung aus festen Partikeln in einem kohlenwasserstoffhaltigen Fluid als Spiralstrom in eine Wirbelkammer (11); (ii) Sammeln von festen Partikeln unterhalb der Wirbelkammer in einem ersten Sammler (118); und (iii) Abführen von Fluid aus der Wirbelkammer, wobei die Spiralströmung in einem Spiralkanal erzeugt wird, der sich oberhalb der Wirbelkammer befindet, wobei der Spiralkanal eine Achse, einen Einlass (1) und einen Auslass (16) aufweist, wobei der Einlass weiter von der Achse entfernt ist als der Auslass, um eine radial nach innen gerichtete Spiralströmung zu erzeugen, wobei ein Querschnittsbereich des Einlasses größer ist als ein Querschnittsbereich des Auslasses, wobei der Spiralkanal die Geschwindigkeit des aus dem Auslass austretenden Fluids im Vergleich zu einer Geschwindigkeit des in den Einlass eintretenden Fluids erhöht, und ferner den Schritt des Steuerns einer Auslassgeschwindigkeit des Fluids des Spiralflusses durch Steuern des Querschnittsbereichs des Auslasses unter Verwendung eines Durchflussbegrenzers (3) umfasst.

11. Verfahren nach Anspruch 10, wobei (A) der Auslass (16) einen Querschnittsbereich von 10 bis 40 %, optional von 20 bis 30 %, ferner optional etwa 25 %, weniger als der Querschnittsbereich des Einlasses (1) aufweist, und/oder (B) der Spiralkanal sich über einen Drehwinkel von 200 bis 300 Grad, optional von 235 bis 270 Grad, erstreckt.

12. Verfahren nach Anspruch 10 oder 11, wobei der Durchflussbegrenzer (3) zusätzlich vorgespannt ist, um einen Fluiddruck am Auslass (16) in Abhängigkeit vom auf den Durchflussbegrenzer wirkenden Fluiddruck zu steuern, oder wobei die Vorspannung des Durchflussbegrenzers automatisch die Auslassgeschwindigkeit des Fluids innerhalb eines gewünschten Bereichs steuert, ferner optional, wobei die Position des Durchflussbegrenzers durch einen Aktuator (4) gesteuert wird, um dadurch die Auslassgeschwindigkeit des Fluids innerhalb eines gewünschten Bereichs zu steuern.

13. Verfahren nach einem der Ansprüche 10 bis 12, wobei (A) das Fluid nach oben aus der Wirbelkammer (11) befördert wird; und/oder (B) ein konisches Element (7) an einem unteren Ende der Wirbelkammer angeordnet ist, wobei das konische Element eine obere Spitze, eine untere Kante und eine konische Oberfläche aufweist, deren Radius in einer Richtung, die sich von der Spitze zur unteren Kante erstreckt, progressiv zunimmt, wobei die untere Kante in einem Diffusorrohr (10) empfangen wird, das sich von der Wirbelkammer nach unten in Richtung des ersten Kollektors (118) erstreckt, wobei optional der untere Rand einen größeren Durchmesser als eine Breite der Wirbelkammer aufweist und das Diffusorrohr in der Nähe des unteren Randes eine größere Breite als der Durchmesser des unteren Randes aufweist, um einen ringförmigen Flusspfad für Feststoffpartikel bereitzustellen, der von der Wirbelkammer nach unten am konischen Element vorbei zum Kollektor führt; und/oder (C) die Feststoffpartikel in einem unterhalb der Wirbelkammer (11) angeordneten Eimer (118) gesammelt werden; und/oder (D) ferner das kontinuierliche oder intermittierende Wiegen einer Menge von in dem ersten Sammler (118) gesammelten Feststoffpartikeln umfasst, wobei das Verfahren optional (a) das Messen des Fluidinnendrucks in der Nähe des ersten Kollektors und das Kompensieren des von der Wiegevorrichtung (19) gemessenen Gewichts basierend auf Variationen des gemessenen Fluidinnendrucks und/oder (b) das Bestimmen einer Variation des Feststoffpartikelgehalts des kohlenwasserstoffhaltigen Fluids in Bezug auf die Zeit und/oder in Bezug auf verschiedene Produktionsbohrungen aus der gewogenen Menge von Feststoffpartikeln umfasst.

14. Verfahren nach einem der Ansprüche 10 bis 13, ferner umfassend das Fördern eines fluidisierten Stroms von Feststoffpartikeln aus einem unteren Abschnitt des Kollektors (118) zu einer mit dem ersten Kollektor verbundenen Feststoffwascheinheit, wobei optional (A) Fluid aus der Feststoffwascheinheit in den unteren Abschnitt des ersten Kollektors gefördert wird, um den fluidisierten Strom zu bilden, und/oder (B) wobei der Fluidstrom zu einem Partikelabscheider (201) zur Abtrennung von Feststoffpartikeln aus dem Fluid befördert wird, wobei die Feststoffpartikel aus dem Partikelabscheider in einem zweiten Sammler (117) empfangen werden, und wobei das Verfahren ferner optional die Reinigung des durch den Partikelabscheider von den Feststoffen abgetrennten Fluids umfasst, indem Öl und ein wässriges Fluid oder Wasser abgetrennt und optional zentrifugal getrennt werden, und vorzugsweise ferner das Zurückführen von wässrigem Fluid oder Wasser aus dem Reinigungsschritt in den ersten Kollektor oder den zweiten Kollektor umfasst, wobei ferner optional die Feststoffwascheinheit mit einer Vielzahl von Trenneinheiten (101) verbunden ist, wobei jede Trenneinheit einen jeweiligen ersten Kollektor einschließt und die Feststoffwascheinheit Feststoffpartikel von den jeweiligen ersten Kollektoren gleichzeitig oder nacheinander empfängt.

15. Verfahren gemäß einem der Ansprüche 10 bis 14, wobei die Öl- und/oder Gasförderanlage eine Vielzahl von Förderbohrlöchern umfasst, die mit einem Auslassverteiler gekoppelt sind, um die kohlenwasserstoffhaltige Ausgabe der Förderbohrlöcher an eine nachgeschaltete Verarbeitungsanlage zu liefern, und jedes der Förderbohrlöcher selektiv durch einen entsprechenden Ventilmechanismus (302, 304) entweder mit einer Eingabe für die Wirbelkammer oder mit dem Auslassverteiler verbunden werden kann, wobei optional der jeweilige Ventilmechanismus gesteuert wird, um die kohlenwasserstoffhaltige Produktion von mindestens einem der Förderbohrlöcher entweder periodisch oder dann, wenn feste Partikel über einer bestimmten Schwellenmenge in der jeweiligen kohlenwasserstoffhaltigen Produktion des mindestens einen Förderbohrlochs erkannt werden, zur Eingabe für die Wirbelkammer zu leiten.

## Revendications

1. Appareil de séparation de particules solides d'un fluide contenant des hydrocarbures, produit par une installation de production de pétrole et/ou de gaz, l'appareil comprenant un canal en spirale présentant un axe, une entrée (1) et une sortie (16), l'entrée étant plus éloignée de l'axe que la sortie, l'entrée présentant une première forme et une première section transversale, et la sortie présentant une seconde forme et une seconde section transversale, dans lequel la première section transversale de l'entrée est supérieure à la seconde section transversale de la sortie, dans lequel les première et seconde formes sont différentes, et le canal en spirale est conçu pour modifier la forme de la section transversale du fluide sortant de la sortie par rapport à la forme de la section transversale du fluide entrant par l'entrée, un limiteur de débit (3) situé à la sortie permet de commander la vitesse de sortie du fluide en commandant la seconde section transversale de la sortie, une chambre à vortex (11) située sous le canal reçoit un débit en spirale du canal, un premier collecteur (9, 118) de particules solides est situé sous la chambre à vortex, et un conduit de fluide (5) pour acheminer le fluide loin de la chambre à vortex.

2. Appareil selon la revendication 1, dans lequel l'entrée (1) présente une section transversale sensiblement arrondie et la sortie (16) présente une section transversale sensiblement polygonale, éventuellement dans lequel l'entrée a une section transversale circulaire et la sortie a une section transversale rectangulaire.

3. Appareil selon une quelconque revendication précédente, dans lequel (i) la sortie présente une section transversale de 10 à 40 %, éventuellement de 20 à 30 %, également éventuellement d'environ 25 %, inférieure à la section transversale de l'entrée et/ou (ii) le canal en spirale se prolonge sur un angle de rotation de 200 à 300 degrés, éventuellement de 235 à 270 degrés ; et/ou (iii) le canal en spirale est conçu pour induire un débit en spirale dans le fluide sortant de la sortie, et/ou (iv) le canal en spirale est conçu pour augmenter la vitesse du fluide sortant de la sortie par rapport à une vitesse du fluide entrant dans l'entrée.

4. Appareil selon une quelconque revendication précédente, dans lequel le limiteur de débit (3) est sollicité pour assurer la commande de la vitesse de sortie du fluide, également, éventuellement, dans lequel le limiteur de débit est sollicité en plus pour commander une pression de fluide à la sortie (16) sur la base de la pression de fluide agissant sur le limiteur de débit ou dans lequel la sollicitation du limiteur de débit est conçue automatiquement pour commander la vitesse de sortie du fluide dans une plage souhaitée.

5. Appareil selon une quelconque revendication précédente, comprenant également un actionneur (4) pour commander la position du limiteur de débit (3) afin de commander ainsi la vitesse de sortie du fluide dans une plage souhaitée en commandant la seconde section transversale de la sortie (16).

6. Appareil selon une quelconque revendication précédente, dans lequel le conduit de fluide (5) se prolonge vers le haut hors de la chambre à vortex (11), de préférence dans lequel le conduit de fluide présente une largeur qui est de 10 à 40 %, éventuellement de 20 à 30 %, également éventuellement d'environ 25 %, d'une largeur de la chambre à vortex.

7. Appareil selon une quelconque revendication précédente, comprenant également un élément conique (7) à une extrémité inférieure de la chambre à vortex (11), l'élément conique présentant une pointe supérieure, un bord inférieur et une surface conique dont le rayon augmente progressivement dans une direction se prolongeant de la pointe au bord inférieur, le bord inférieur étant reçu dans un tuyau diffuseur (10) se prolongeant vers le bas de la chambre à vortex vers le premier collecteur, éventuellement dans lequel le bord inférieur présente un diamètre plus grand que la largeur de la chambre à vortex et à proximité du bord inférieur, le tuyau diffuseur présente une largeur plus grande que le diamètre du bord inférieur pour fournir un trajet de débit annulaire pour les particules solides vers le bas au-delà de l'élément conique de la chambre à vortex vers le premier collecteur, également éventuellement dans lequel (A) une distance entre la pointe supérieure et une extrémité inférieure du conduit de fluide est de 0,5 à 1,5 fois, éventuellement environ 1 fois, la largeur du conduit de fluide, et/ou (B) le premier collecteur est un godet (118) et un élément de tuyau (9) se prolonge du tuyau diffuseur dans le seau à travers un trou au sommet du seau.

8. Appareil selon une quelconque revendication précédente (A) comprenant également un dispositif de pesage (19) pour le pesage d'une quantité de particules solides collectées dans le premier collecteur (118), éventuellement l'appareil comprenant également un capteur de pression (20) pour mesurer la pression interne du fluide à proximité du premier collecteur (118) et un dispositif de commande (116) pour compenser le poids mesuré par le dispositif de pesage sur la base des variations de la pression interne du fluide mesurée par le capteur de pression, également éventuellement dans lequel le premier collecteur est supporté par, ou peut être mis en prise sélectivement par, le dispositif de pesage de manière à avoir un mouvement vertical sensiblement illimité lorsqu'il est supporté par ou mis en prise par le dispositif de pesage.

9. Appareil selon une quelconque revendication précédente, comprenant également une unité de lavage des solides raccordée au collecteur, l'unité comprenant un tuyau de rinçage (114) pour acheminer un fluide fluidisant vers la partie inférieure du premier collecteur (118), un tuyau d'élimination des solides (413) pour recevoir un flux fluidisé de particules solides provenant de la partie inférieure du premier collecteur, un séparateur de particules (201) pour recevoir le flux fluidisé et séparer les particules solides du fluide, et un second collecteur (117) pour recevoir les particules solides du séparateur de particules, éventuellement dans lequel le premier collecteur est raccordé au tuyau d'élimination des solides par un premier raccord flexible ou dans lequel le premier collecteur est raccordé au tuyau de rinçage par un second raccord flexible, éventuellement (A) l'appareil comprenant également un épurateur de fluide (202) raccordé au séparateur de particules pour épurer le fluide séparé par le séparateur de particules, éventuellement dans lequel l'épurateur de fluide comprend au moins un séparateur de particules, un filtre, un absorbeur ou une combinaison de ceux-ci pour séparer l'huile et un fluide aqueux, éventuellement l'appareil comprenant également un conduit de retour pour raccorder sélectivement la sortie d'eau de l'épurateur de fluide au premier collecteur (118) ou au second collecteur (117), et/ou (B) l'appareil comprenant également une pompe (213) qui est située en aval, dans le sens du débit de fluide, d'une sortie du séparateur de particules ; et/ou (C) dans lequel l'appareil comprend une pluralité d'unités de séparation (101), chaque unité de séparation comprenant le canal en spirale, la chambre à vortex, le premier collecteur et le conduit de fluide, et l'unité de lavage des solides est raccordée à la pluralité d'unités de séparation et conçue pour recevoir des particules solides provenant des premiers collecteurs respectifs simultanément ou séquentiellement.

10. Procédé de séparation de particules solides d'un fluide contenant des hydrocarbures produit à partir d'une installation de production de pétrole et/ou de gaz, le procédé comprenant les étapes : (i) d'introduction d'un flux d'un mélange de particules solides dans un fluide contenant des hydrocarbures sous forme de débit en spirale dans une chambre à vortex (11) ; (ii) de collecte des particules solides sous la chambre à vortex dans un premier collecteur (118) ; et (iii) d'acheminement du fluide loin de la chambre à vortex, dans lequel le débit en spirale est généré dans un canal en spirale situé au-dessus de la chambre à vortex, le canal en spirale présentant un axe, une entrée (1) et une sortie (16), l'entrée étant plus éloignée de l'axe que la sortie pour produire un débit en spirale dirigé radialement vers l'intérieur, une surface de section transversale de l'entrée étant plus grande qu'une surface de section transversale de la sortie, dans lequel le canal en spirale augmente la vitesse du fluide sortant de la sortie par rapport à une vitesse du fluide entrant dans l'entrée, et comprenant également l'étape de commande d'une vitesse de sortie du fluide du débit en spirale en commandant la surface de section transversale de la sortie à l'aide d'un limiteur de débit (3).

11. Procédé selon la revendication 10, dans lequel (A) la sortie (16) présente une section transversale de 10 à 40 %, éventuellement de 20 à 30 %, également éventuellement d'environ 25 %, inférieure à la section transversale de l'entrée (1), et/ou (B) le canal en spirale se prolonge sur un angle de rotation de 200 à 300 degrés, éventuellement de 235 à 270 degrés.

12. Procédé selon la revendication 10 ou la revendication 11, dans lequel le limiteur de débit (3) est également sollicité pour commander une pression de fluide à la sortie (16) sur la base de la pression de fluide agissant sur le limiteur de débit ou dans lequel la sollicitation du limiteur de débit commande automatiquement la vitesse de sortie du fluide dans une plage souhaitée, éventuellement également dans lequel la position du limiteur de débit est commandée par un actionneur (4) pour ainsi commander la vitesse de sortie du fluide dans une plage souhaitée.

13. Procédé selon l'une quelconque des revendications 10 à 12, dans lequel (A) le fluide est acheminé vers le haut hors de la chambre à vortex (11) ; et/ou (B) un élément conique (7) est disposé à une extrémité inférieure de la chambre à vortex, l'élément conique présentant une pointe supérieure, un bord inférieur et une surface conique dont le rayon augmente progressivement dans une direction se prolongeant de la pointe au bord inférieur, le bord inférieur étant reçu dans un tuyau diffuseur (10) se prolongeant vers le bas de la chambre à vortex vers le premier collecteur (118), éventuellement dans lequel le bord inférieur présente un diamètre plus grand que la largeur de la chambre à vortex et à proximité du bord inférieur le tuyau diffuseur présente une largeur plus grande que le diamètre du bord inférieur pour fournir un trajet de débit annulaire pour les particules solides vers le bas au-delà de l'élément conique de la chambre à vortex vers le collecteur ; et/ou (C) les particules solides sont collectées dans un seau (118) disposé sous la chambre à vortex (11) ; et/ou (D) comprenant également le pesage continue ou intermittente d'une quantité de particules solides collectées dans le premier collecteur (118), éventuellement le procédé comprenant également (a) la mesure de la pression interne du fluide à proximité du premier collecteur et la compensation du poids mesuré par le dispositif de pesage (19) sur la base des variations de la pression interne du fluide mesurée, et/ou (b) la détermination à partir de la quantité pesée de particules solides d'une variation de la teneur en particules solides du fluide contenant des hydrocarbures par rapport au temps et/ou par rapport à différents puits de production.

14. Procédé selon l'une quelconque des revendications 10 à 13, comprenant également l'acheminement d'un flux fluidisé de particules solides depuis la partie inférieure du collecteur (118) vers une unité de lavage des solides raccordée au premier collecteur, éventuellement (A) dans lequel le fluide est acheminé dans la partie inférieure du premier collecteur depuis l'unité de lavage des solides pour former le flux fluidisé, et/ou (B) dans lequel le flux fluidisé est acheminé vers un séparateur de particules (201) pour séparer les particules solides du fluide, les particules solides provenant du séparateur de particules étant reçues dans un second collecteur (117), et éventuellement également le procédé comprenant, le nettoyage du fluide séparé des solides par le séparateur de particules par séparation, éventuellement par centrifugation, de l'huile et d'un fluide aqueux ou de l'eau, et de préférence encore le retour du fluide aqueux ou de l'eau de l'étape de nettoyage vers le premier ou le second collecteur, éventuellement dans lequel l'unité de lavage des solides est également, raccordée à plusieurs unités de séparation (101), chaque unité de séparation comprenant un premier collecteur respectif, et l'unité de lavage des solides reçoit simultanément ou séquentiellement les particules solides des premiers collecteurs respectifs.

15. Procédé selon l'une quelconque des revendications 10 à 14, dans lequel l'installation de production de pétrole et/ou de gaz comprend une pluralité de puits de production couplés à un collecteur de sortie pour acheminer la sortie contenant des hydrocarbures des puits de production vers une installation de traitement en aval, et chacun des puits de production peut être sélectivement raccordé par un mécanisme de vanne respectif (302, 304) soit à une entrée pour la chambre à vortex, soit au collecteur de sortie, dans lequel le mécanisme de vanne respectif est éventuellement commandé pour diriger la sortie contenant des hydrocarbures d'au moins l'un des puits de production vers l'entrée pour la chambre à vortex, soit périodiquement, soit lorsque des particules solides supérieures à une quantité seuil particulière sont détectées dans la sortie contenant des hydrocarbures respective de l'au moins un puits de production.
